# EUROPEAN PATENT APPLICATION

(11) **EP 1 464 695 A1**
(43) Date of publication of application: **06.10.2004**
(21) Application number: 02793413.2
(22) Date of filing: 26.12.2002
(51) Int. Cl.: C12M 1/34, C12N 15/00, C12Q 1/68

(54) **REACTION VESSEL AND REACTION VESSEL HOLDING MECHANISM**

(30) Priority: 26.12.2001 JP 2001395140
(71) Applicant: Olympus Corporation, Tokyo (JP)
(72) Inventor: SHIBAZAKI, Takami, Hachioji-shi, Tokyo 193-0832 (JP); MISHIMA, Shuzo, Hachioji-shi, Tokyo 192-0065 (JP); ISHII, Hidekazu, Hachioji-shi, Tokyo 192-0045 (JP)
(74) Representative: von Hellfeld, Axel, Dr. Dipl.-Phys.
(86) International application number: PCT/JP2002/013639
(87) International publication number: WO 2003/055973

(57) **Abstract**

The present invention is directed to a reaction vessel (100) used for a genetic test, and the reaction vessel (100) has at least one reaction liquid containing section for containing a reaction liquid. The reaction liquid containing section has an upper well (152) opening in an upper surface of the reaction vessel (100), a lower well (112) located under the upper well (152), and a flow path (114) communicating an external space with the lower well (112). The reaction vessel (100) further has a reaction section (132) disposed between the upper well (152) and the lower well (112). The reaction section (132) has a nucleic acid probe fixed to bones of a porous member. The upper well (152) opening in the upper surface of the reaction vessel (100) enables optical observation of the reaction section (132) from above the reaction vessel (100).

## Description

### Technical Field

The present invention relates to a reaction vessel used for genetic tests, and relates in particular to a reaction vessel suitably applied to genetic tests using a DNA microarray.

### Background Art

Genetic analyses of many living organisms including human beings and many plants including rice have recently been progressing.

Generally, genetic tests have heretofore been performed by an electrophoretic method. The electrophoretic method requires a long time for testing, and is limited to a small number of tests that can be performed at one time.

Recently, a new testing method using a DNA chip or DNA microarray, in which DNA is regularly arranged on a semiconductor or the like, has been developed. This new testing method allows a plurality of genes to be tested at the same time.

However, this new testing method requires a long time for testing, and has difficulty in obtaining a reproducible analytical result.

The present applicant has proposed in Japanese Patent Application No. 2001-232501 a genetic testing apparatus and a genetic detection method, which use a three-dimensional DNA microarray and can test genes simply in a short time.

In this genetic test, a reaction liquid is put in a liquid containing section divided by the three-dimensional DNA microarray (reaction section) using a porous filter as a carrier, and the reaction liquid is repeatedly passed through the reaction section by pressurization and depressurization of a pump such a syringe pump. This makes it possible to reproducibly obtain nucleic acid in a short time.

Jpn. Pat. Appln. KOKAI Publication No. 1-180435 and US Pat. No. 5,552,580 disclose apparatuses that heat a microplate.

These apparatuses simply perform an amplification reaction of nucleic acid with the microplate being sealed, and do not at all give consideration to observation of a nucleic acid reaction.

### Disclosure of Invention

A primary object of the present invention is to provide a technique that enables optical observation while a reaction is performed for a genetic test with a controlled temperature. Therefore, a secondary object of the present invention is to provide a reaction vessel that can be suitably applied to such a genetic test. Another secondary object of the present invention is to provide a reaction vessel holding mechanism that can simply and detachably hold the reaction vessel.

The present invention concerns in one aspect a reaction vessel used for a genetic test. The reaction vessel of the present invention comprises at least one reaction liquid containing section for containing a reaction liquid, the reaction liquid containing section having an upper well opening in an upper surface of the reaction vessel, a lower well located under the upper well, and a flow path communicating an external space with the lower well, and a reaction section disposed between the upper well and the lower well, the reaction section having a nucleic acid probe fixed to bones of a porous member, wherein the upper well opening in the upper surface of the reaction vessel enables optical observation of the reaction section from above the reaction vessel.

Preferably, a sum of volumes of the lower well and the flow path is larger than a volume of the upper well, and the lower well and the flow path can contain a whole amount of reaction liquid first put in the upper well.

Preferably, the reaction vessel further has a groove extending from the upper well in the upper surface of the reaction vessel, and the groove is partially covered by a cover glass which is mounted on the reaction vessel to prevent the reaction liquid from evaporating, so that passage of air is secured between the upper well and the external space.

Preferably, the reaction vessel further has a concave portion, which restricts a position to mount the cover glass, and the groove extends out of the concave portion.

Preferably, the reaction vessel further has a ring groove, which encloses an opening end of the flow path located in a side surface of the reaction vessel to receive an O-ring.

Preferably, the reaction vessel further has a liquid containing section for containing and retaining liquid, a first groove extending in the upper surface of the reaction vessel between the upper well and the liquid containing section, and a second groove extending from the liquid containing section in the upper surface of the reaction vessel, and the second groove is partially covered by the cover glass which is mounted on the reaction vessel to prevent the evaporation of the reaction liquid, and the passage of air is secured between the upper well and the external space via the liquid containing section.

Preferably, the reaction vessel further has a protrusion formed on a bottom surface of the lower well, and the protrusion restricts deformation of the reaction section.

The present invention concerns in one aspect a reaction vessel holding mechanism for holding the above-described reaction vessel used for a genetic test. The reaction vessel holding mechanism of the present invention has a mounting table, on which the reaction vessel is mounted, a receiving section, onto which the reaction vessel is pressed, clamp mechanisms, which clamp the reaction vessel onto the receiving section, a first temperature control system for controlling the temperature of the reaction vessel, and a second temperature control system for controlling the temperature of an atmosphere in the vicinity of the upper surface of the reaction vessel.

Preferably, the second temperature control system has heating means, which is disposed away from the reaction vessel near the upper surface of the reaction vessel.

Preferably, the reaction vessel holding mechanism further has a cover member, which is disposed above the reaction vessel, and supports the heating means, and the cover member has a window permitting transmission of light, and the window is located above the reaction section of the reaction vessel and enables optical observation of the reaction section from above the reaction vessel.

Preferably, the cover member further has an optically transparent member, which spatially closes the window.

### Brief Description of Drawings

FIG. 1 is an exploded perspective view of a reaction vessel in a first embodiment of the present invention;
FIG. 2 is an assembled perspective view of the reaction vessel shown in FIG. 1;
FIG. 3 is a sectional view of the reaction vessel along the III-III line of FIG. 2;
FIG. 4 is a perspective view of a reaction vessel holding mechanism, with which the reaction vessel of FIG. 1 to FIG. 3 is combined;
FIG. 5 is a side view of the reaction vessel holding mechanism of FIG. 4, partially showing sections of the reaction vessel and the reaction vessel holding mechanism;
FIG. 6 is a sectional perspective view of the reaction vessel according to a modification;
FIG. 7 is a sectional perspective view of the reaction vessel according to another modification;
FIG. 8 schematically shows an overall configuration of a microscope, into which the reaction vessel holding mechanism is incorporated;
FIG. 9 is a perspective view of the reaction vessel in a second embodiment of the present invention;
FIG. 10 is a perspective view of the reaction vessel holding mechanism, with which the reaction vessel of FIG. 9 is combined;
FIG. 11 is another perspective view of the reaction vessel holding mechanism of FIG. 10; and
FIG. 12 is a sectional view of main parts of the reaction vessel of FIG. 9 and the reaction vessel holding mechanism of FIG. 10 and FIG. 11.

### Best Mode for Carrying Out the Invention

Embodiments of the present invention will hereinafter be described in reference to the drawings.

### First Embodiment

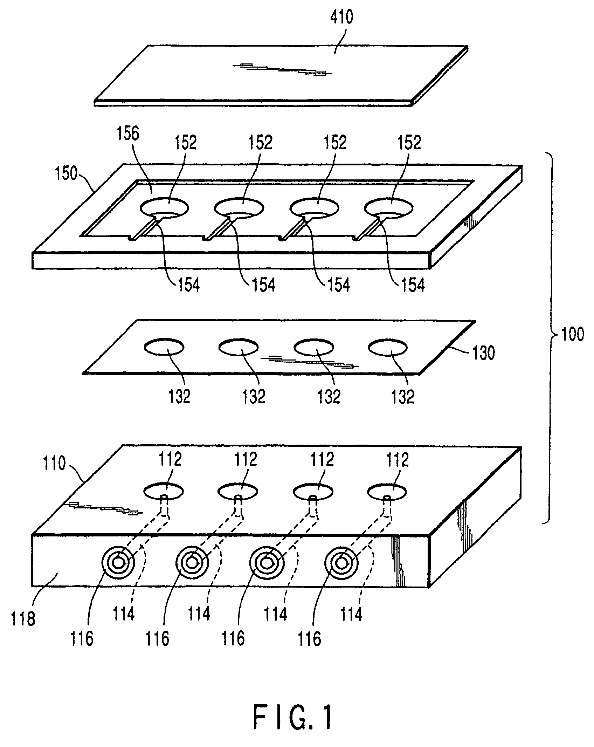

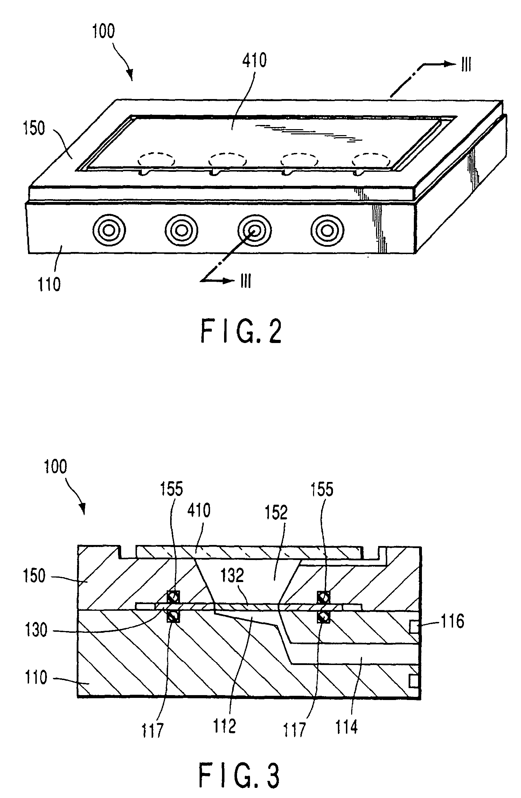

A reaction vessel 100 has at least one reaction liquid containing section, preferably a plurality of reaction liquid containing sections, for example, four reaction liquid containing sections as shown in FIG. 1 and FIG. 2. As shown in FIG. 3, each of the reaction liquid containing sections has an upper well 152 opening in an upper surface of the reaction vessel 100, a lower well 112 located under the upper well 152, and a flow path 114 communicating an external space with the lower well 112.

In the following description, the reaction vessel 100 has, but is not limited to, the four reaction liquid containing sections.

The reaction vessel 100 further has a reaction section 132 disposed between the upper well 152 and the lower well 112. In other words, the upper well 152 and the lower well 112 are separated by the reaction section 132. The reaction section 132 has a nucleic acid probe fixed to bones of a porous member.

The reaction vessel 100 has the upper well 152 opening in its upper surface, and such an upper well 152 enables optical observation of the reaction section 132 from above the reaction vessel 100.

In order to obtain the structure described above, the reaction vessel 100 has a base 110 and a top plate 150 constituting a vessel main body, and an alumina porous member 130 having the reaction sections 132, as shown in FIG. 1. The base 110 and the top plate 150 are made of, for example, polycarbonate, and are fixed to each other in an optional proper method such as screwing or adhesive bonding with the alumina porous member 130 placed in between.

Here, as shown in FIG. 3, each of the upper wells 152 and each of the lower wells 112 are preferably in an airtight state by use of packing members such as O-rings 155 and O-rings 117. If each well is kept airtight with the packing members, it is possible to avoid not only an influence from the external space but also an influence between the wells, which is preferable.

The top plate 150 has tapered through-holes for defining the upper wells 152, and grooves 154 extending from the through-holes (the upper wells 152) in the upper surface of the top plate 150.

The base 110 has concave portions for defining the lower wells 112, and the flow paths 114 communicating the external space with the concave portions (the lower wells 112). More specifically, the base 110 has a flat side surface 118, and the flow paths 114 extend from a bottom surface of the concave portions (the lower wells 112) and terminate at the side surface 118 of the base 110. The base 110 further has, in the side surface 118 (i.e., a flow path terminating surface), ring grooves 116, which enclose opening ends of the flow paths 114 to receive the O-rings.

The base 110 may further have one protrusion or a plurality of protrusions formed on the bottom surface of the concave portion (the lower well 112) to reduce deformation of the reaction section 132, in order to avoid breakage, that is, crack or tear of the reaction section 132. The protrusion may be pin-shaped or plate-shaped.

As described above, the reaction liquid containing section is composed of the upper well 152, the lower well 112 and the flow path 114, as shown in FIG. 3. The sum of volumes of the lower well 112 and the flow path 114 is larger than the volume of the upper well 152. Therefore, the lower well 112 and the flow path 114 can contain the whole amount of reaction liquid first put in the upper well 152. The flow path 114 may have an extension so called a fluid reservoir to obtain an adequate capacity.

In order to reduce the evaporation of the reaction liquid, the reaction vessel 100 preferably has the flat upper surface, on which a cover glass 410 is mounted. The cover glass 410 covers the entire upper well 152, and is placed to partially cover the groove 154. Total covering of the upper well 152 reduces the evaporation of the reaction liquid to the minimum, while the partial covering of the groove 154 allows air to pass between the upper well 152 and the external space.

In the more suitable reaction vessel, in order to ensure the passage of air, the top plate 150 further has a concave portion 156 for determining a position to mount the cover glass 410, and the concave portion 156 has a flat bottom, and the groove 154 extends out of the concave portion 156. Such a structural feature ensures that the groove 154 can be prevented from being entirely covered by the cover glass 410.

The reaction vessel 100 may be variously changed and modified.

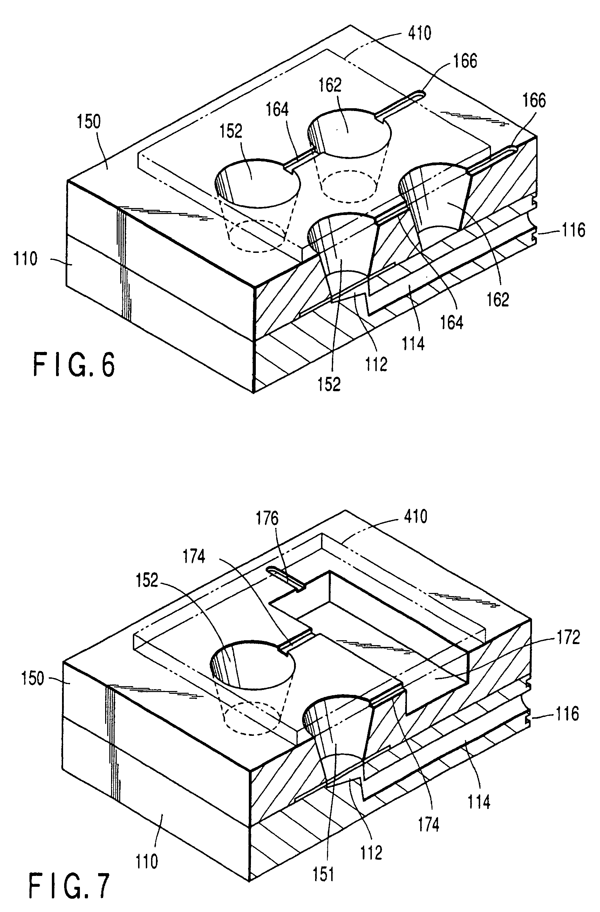

For example, as shown in FIG. 6, the reaction vessel 100 may further have a liquid containing section 162 for containing and retaining liquid, in addition to the reaction liquid containing section (the upper well 152, the lower well 112 and the flow path 114) for containing the reaction liquid and the reaction section 132. More specifically, the reaction vessel 100 has the reaction liquid containing section (the upper well 152, the lower well 112 and the flow path 114), the reaction section 132, the liquid containing section 162, a groove 164 communicating the upper well 152 with the liquid containing section 162, and a groove 166 extending from the liquid containing section 162.

The cover glass 410 is mounted to entirely cover the upper well 152, the liquid containing section 162 and the groove 164 and partially cover the groove 166. The reaction vessel may naturally have a concave portion for restricting the position to mount the cover glass 410 as shown in FIG. 1.

The upper well 152 is connected to the external space via the liquid containing section 162 containing water or buffer. In other words, the passage of air is secured between the upper well 152 and the external space via the liquid containing section 162. The water or buffer contained in the liquid containing section 162 increases the humidity of an atmosphere on a periphery of the upper well 152. This further reduces the evaporation of the reaction liquid.

Such reduction of evaporation by the water or buffer is especially preferable in a high-accuracy measurement or measurement at a high temperature. It is presumed that in the future, many reaction liquids will be automatically detected in many wells in, for example, clinical tests. In such usage, highly accurate results are requested and the reduction of evaporation of the reaction liquid is strongly desired. The reduction of evaporation by the water or buffer described above is also preferable in this usage.

The reaction vessel 100 does not need to have one liquid containing section 162 for one reaction liquid containing section as shown in FIG. 6. In other words, as shown in FIG. 7, the reaction vessel 100 may have the plurality of reaction liquid containing sections (the upper wells 152, the lower wells 112 and the flow paths 114), the plurality of reaction sections 132, one liquid containing section 172, and one groove 176 extending from the liquid containing section 172. The upper wells 152 of the plurality of reaction liquid containing sections are in communication with the liquid containing section 172 via a plurality of grooves 174, and the liquid containing section 172 is in communication with the external space via one groove 176.

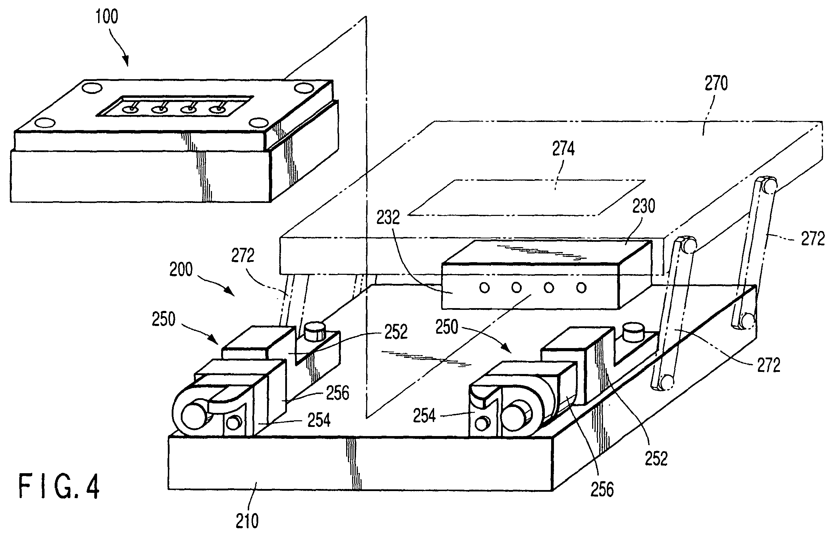

The reaction vessel 100 is detachably connected to, for example, a reaction vessel holding mechanism 200 shown in FIG. 4.

The reaction vessel holding mechanism 200 has a mounting table 210, a receiving section 230 provided in the mounting table 210, and a pair of clamp mechanisms 250 for fixing the reaction vessel 100. The receiving section 230 has a contact surface 232, onto which the flow path terminating surface 118 of the reaction vessel 100 is pressed. The clamp mechanisms 250 clamp the reaction vessel 100 onto the receiving section 230 to hold the reaction vessel 100.

Each of the clamp mechanisms 250 is, for example, mechanical mechanism utilizing a screw, and has a fixing portion 252 fixed to the mounting table 210, a lever portion 254 rotationally operated, and a slider 256, which moves in accordance with the rotational operation of the lever portion 254. The pair of fixing portions 252 is disposed with a space slightly larger than the width of the reaction vessel 100, and serves at the same time as a guide to define the lateral position of the reaction vessel 100 to be attached.

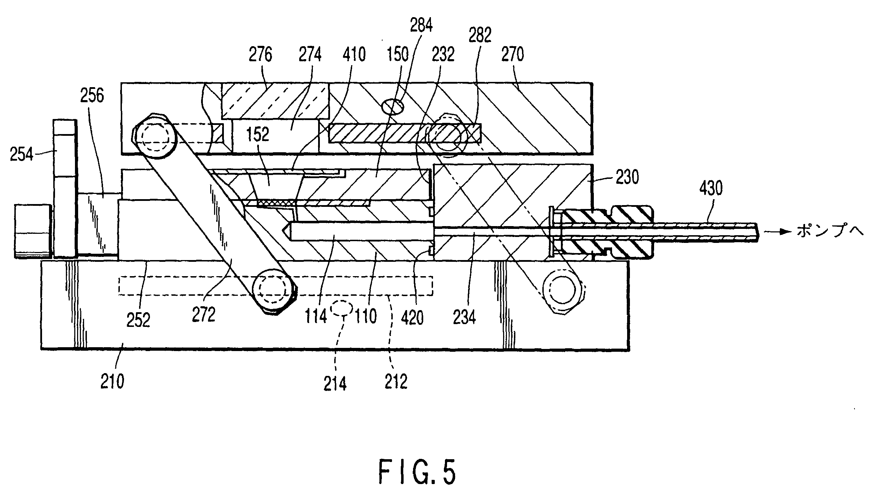

The receiving section 230 has through-holes 234 penetrating its inside, as shown in FIG. 5. One end of the through-hole 234 terminates at the contact surface 232, and a tube 430 is attached to the other end of the through-hole 234. The tube 430 is fluidly coupled to an unshown pump, for example, a syringe piston. The through-holes 234 of the receiving section 230 are arranged at the same pitch as the opening ends of the flow paths 114 of the reaction vessel 100.

The reaction vessel 100 is placed on the mounting table 210 so that the side surface 118 where the flow paths 114 terminate, that is, the flow path terminating surface 118 is directed toward the contact surface 232 of the receiving section 230. The lateral position of the reaction vessel 100 is substantially decided by the fixing portions 252 of the pair of clamp mechanisms 250, and the longitudinal position of the reaction vessel 100 is also substantially decided by the receiving section 230 and the sliders 256.

The rotation of the lever portions 254 moves the sliders 256 toward the receiving section 230. The movement of the sliders 256 clamps the reaction vessel 100 onto the receiving section 230. The reaction vessel 100 is airtightly coupled to the receiving section 230 through an O-ring 420.

The reaction vessel 100 is thus fixed by the reaction vessel holding mechanism 200 to fluidly connect the flow paths 114 of the reaction vessel 100 to the through-holes 234 of the receiving section 230. Therefore, the flow paths 114 of the reaction vessel 100 are fluidly coupled to the pumps such as the syringe pistons via the through-holes 234 of the receiving section 230 and the tubes 430.

In this way, the reaction vessel holding mechanism 200 can easily detachably hold the reaction vessel 100.

The reaction vessel holding mechanism 200 has part of a vessel temperature control system for controlling the temperature of the reaction vessel 100. The vessel temperature control system has, for example, heating means for heating the reaction vessel 100. The vessel temperature control system may further have cooling means for cooling the reaction vessel 100 for more rapidly responsive temperature control. The cooling means is usually disposed outside the reaction vessel holding mechanism 200.

For this reason, the mounting table 210 has, for example, a heater 212, which generates heat in response to current supply, and a temperature sensor 214, which detects its temperature. Alternatively, the mounting table 210 may have a circular path for circulating a high-temperature fluid, for example, liquid or gas.

The reaction vessel holding mechanism 200 has part of an atmosphere temperature control system for controlling temperature of an atmosphere in the vicinity of the cover glass 410 to avoid clouding of the cover glass 410. The atmosphere temperature control system has heating means for controlling the atmosphere in the vicinity of the cover glass 410.

For this reason, the reaction vessel holding mechanism 200 has a plate cover member 270 disposed away from the reaction vessel 100 near the upper surface of the reaction vessel 100 as shown in FIG. 4 and FIG. 5, and the plate cover member 270 has, for example, a heater 282, which generates heat in response to current supply, and a temperature sensor 284, which detects its temperature. Alternatively, the plate cover member 270 may have a circular path for circulating a high-temperature fluid, for example, liquid or gas.

The atmosphere temperature control system adjusts the temperature of the atmosphere in the vicinity of the cover glass to prevent the clouding of the cover glass. The atmosphere temperature control system has only to be able to maintain the temperature of the atmosphere in the vicinity of the cover glass at dew point or higher. The dew point is dependent upon the temperature of the atmosphere in the vicinity of the cover glass.

The reaction vessel 100 is not completely sealed so as not to prevent the reaction liquid therein from moving. The reaction liquid in the reaction vessel 100 moves in response to the depressurization and pressurization of the flow path by the pump. The movement of the reaction liquid passes the air. The passage of air reduces temperature gradient occurring in the wells, and changes the humidity of the atmosphere in the vicinity of the cover glass.

Therefore, temperature setting of the atmosphere temperature control system is preferably performed in consideration of the humidity of the atmosphere in the vicinity of the cover glass. However, the temperature may actually be set to such a degree that the clouding is reduced so as not to hamper the optical observation.

For example, the atmosphere temperature control system may adjust the atmosphere in the vicinity of the cover glass to a temperature higher than a set temperature of the vessel temperature control system, or to the same temperature as the set temperature. The temperature of the atmosphere temperature control system is set higher than the set temperature of the vessel temperature control system to more effectively prevent the clouding of the cover glass. The temperature of the atmosphere temperature control system is set to the same degree as the set temperature of the vessel temperature control system to more easily control the temperature of the reaction liquid.

The vessel temperature control system and the atmosphere temperature control system are desirably set to a temperature suitable for an object to be detected. The temperature is preferably set to, but not specifically limited to, 35°C to 95°C. The temperature in this range makes it easy to denature (dissolve a higher-order structure) genes in the reaction liquid, or to remove bonded genes from the probe. The temperature is more suitably set to 35°C to 80°C to detect genes.

The reaction vessel holding mechanism 200 may further have a mechanism that blows air toward the cover glass to prevent the clouding of the cover glass.

The plate cover member 270 is preferably provided movably in the mounting table 210 through links 272 as shown in FIG. 4 and FIG. 5 to facilitate attaching and detaching operations of the reaction vessel 100.

The plate cover member 270 has a window 274, which enables the optical observation of the reaction vessel from above. The window 274 of the plate cover member 270 is preferably covered with an optically transparent member in the vicinity of the upper surface of the reaction vessel in order to efficiently produce an atmosphere at a temperature higher than that of the reaction vessel. Such a member is, for example, glass, but preferably a material with a high thermal conductivity and high transparency.

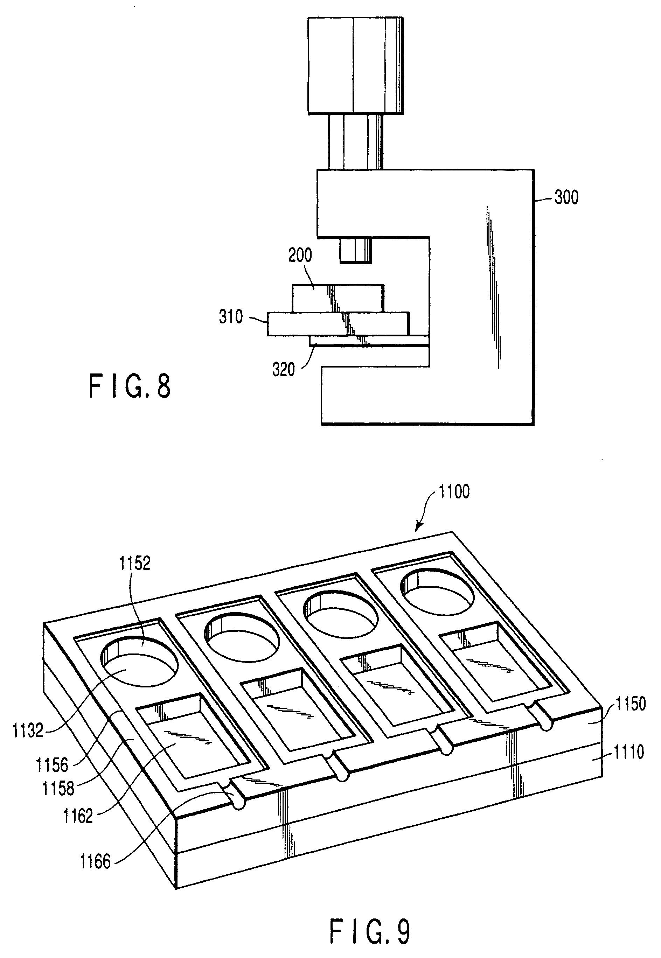

The reaction vessel holding mechanism 200 is combined with a stage, for example, a Z stage 320 of an optical microscope 300 through an XY stage 310, as schematically shown in FIG. 8. The reaction vessel 100 held by the reaction vessel holding mechanism 200 is optically observed from above by the optical microscope 300. Since the upper well 152 of the reaction vessel 100 is open in the upper surface as described above, a reaction occurring in the reaction section 132 can be observed from above by the optical microscope 300.

For example, the reaction vessel holding mechanism 200 is moved by the XY stage 310 in accordance with the time of the optical observation, and the reaction section 132 of the reaction vessel 100 to be observed is placed within an observation field of the optical microscope 300 and subjected to, for example, fluorescence observation by the optical microscope 300.

The reaction vessel 100 is properly attached to the reaction vessel holding mechanism 200. The flow paths 114 of the attached reaction vessel 100 are connected to the pumps via the through-holes 234 of the receiving section 230 and the tubes 430 connected thereto. Thus, the reaction liquid in the reaction liquid containing section (the upper well 152, the lower well 112 and the flow path 114) of the reaction vessel 100 is fluidly connected to an internal space of the pump with an airspace in the middle.

The pump sucks air present between the pump and the reaction liquid, and can therefore depressurize the flow path 114 of the reaction vessel. The reaction liquid moves from the upper well 152 to a lower space (spaces of the lower well 112 and the flow path 114) through the reaction section 132 in accordance with the depressurization.

Since total capacity of the lower space (the lower well 112 and the flow path 114) of the reaction liquid containing section is larger than the capacity of the upper well 152 as described above, the total amount of reaction liquid first put in the upper well 152 can be contained in the lower space. The lower space is depressurized by the pump within a range in which the reaction liquid remains in the reaction vessel.

Furthermore, the pump can pressurize the flow path 114 of the reaction vessel. The reaction liquid moves from the lower space (the lower well 112 and the flow path 114) to the upper well 152 through the reaction section 132 in accordance with the pressurization.

The flow path 114 of the reaction vessel is repeatedly depressurized and pressurized by the pump, whereby the reaction liquid moves back and forth between the upper well 152 and the lower space (the lower well 112 and the flow path 114) through the reaction section 132.

The reaction liquid can be thus repeatedly passed through the reaction section 132 to detect an object to be observed, for example, nucleic acid in a relatively short time.

The reaction vessel 100 is, for example, disposable, but is not limited. That is, the alumina porous member 130 is disposed of after it is used one time, but the base 110 and the top plate 150 may be reused after cleaned.

### Second Embodiment

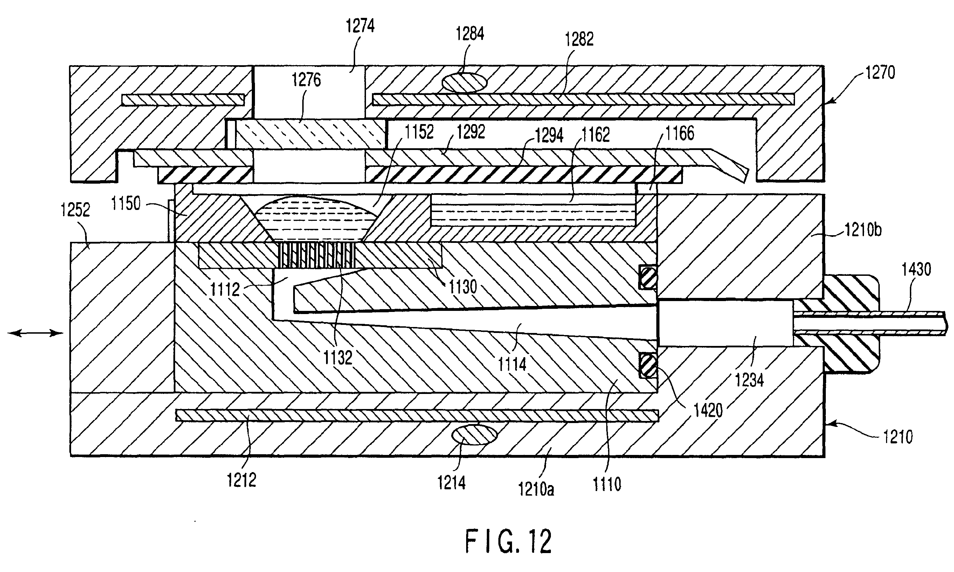

A reaction vessel 1100 has at least one reaction liquid containing section, and the reaction liquid containing section has an upper well 1152 opening in an upper surface of the reaction vessel 1100, a lower well 1112 located under the upper well 1152, and a flow path 1114 communicating the external space with the lower well 1112, as shown in FIG. 12. The reaction vessel 1100 preferably has a plurality of reaction liquid containing sections, for example, but is not limited to, four reaction liquid containing sections, as shown in FIG. 9.

The reaction vessel 1100 further has a reaction section 1132 disposed between the upper well 1152 and the lower well 1112. The reaction section 1132 has a nucleic acid probe fixed to bones of a porous member.

The reaction vessel 1100 has the upper well 1152 opening in its upper surface, and such an upper well 1152 enables the optical observation of the reaction section 1132 from above the reaction vessel 1100.

In order to obtain the structure described above, the reaction vessel 1100 has a base 1110 and a top plate 1150 constituting a vessel main body, and an alumina porous member 1130 having the reaction sections 1132, as shown in FIG. 12. The base 1110 and the top plate 1150 are made of, for example, polycarbonate, and are fixed to each other in an optional proper method such as screwing or adhesive bonding with the alumina porous member 1130 placed in between.

The top plate 1150 has tapered through-holes for defining the upper wells 1152.

The base 1110 has concave portions for defining the lower wells 1112, and the flow paths 1114 communicating the external space with the concave portions (the lower wells 1112). More specifically, the base 1110 has a flat side surface 1118, and the flow paths 1114 extend from a bottom surface of the concave portions (the lower wells 1112) and terminate at the side surface 1118 of the base 1110. The base 1110 further has, in the side surface 1118 (i.e., a flow path terminating surface), ring grooves 1116, which enclose opening ends of the flow paths 1114 to receive the O-rings.

As described above, the reaction liquid containing section is composed of the upper well 1152, the lower well 1112 and the flow path 1114, as shown in FIG. 12. The sum of volumes of the lower well 1112 and the flow path 1114 is larger than the volume of the upper well 1152. Therefore, the lower well 1112 and the flow path 1114 can contain the whole amount of reaction liquid first put in the upper well 1152. The flow path 1114 may have an extension so called a fluid reservoir to obtain an adequate capacity.

The reaction vessel 1100 further has a liquid containing section 1162 for containing and retaining liquid, in addition to the reaction liquid containing section (the upper well 1152, the lower well 1112 and the flow path 1114) and the reaction section 1132. The liquid containing section 1162 comprises a rectangular concave portion opening in the upper surface of the reaction vessel 1100. In other words, the top plate 1150 has the concave portion defining the liquid containing section 1162.

The reaction vessel 1100 has, in FIG. 9, the same number of liquid containing sections 1162 as the reaction liquid containing sections, but the number of liquid containing sections 1162 is not limited thereto, and can be changed as needed. For example, the reaction vessel 1100 may have one liquid containing section 1162 for a plurality of reaction liquid containing sections.

Opening ends of the upper well 1152 and the liquid containing section 1162 are positioned lower than a top end plate 1158 of the reaction vessel 1100. In other words, the top plate 1150 has rectangular depressions 1156 depressed from the top end plate 1158, and the rectangular depression 1156 surrounds the upper well 1152 and the liquid containing section 1162. That is, the tapered through-hole defining the upper well 1152 and the concave portion defining the liquid containing section 1162 are formed in a bottom surface of the rectangular depression 1156.

Furthermore, the top plate 1150 has a groove 1166 extending between the flow path terminating surface 1118 and a side surface of the depression 1156 closest to the flow path terminating surface 1118. The groove 1166 provides an air flow path that enables the passage of air between the upper well 1152 and an external space of the reaction vessel 1100 while the reaction vessel 1100 is held by the reaction vessel holding mechanism as described above.

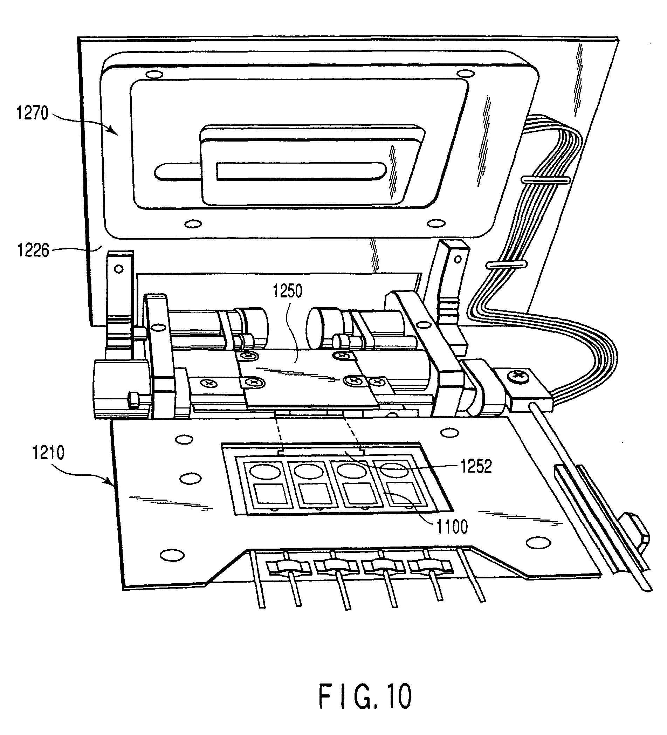

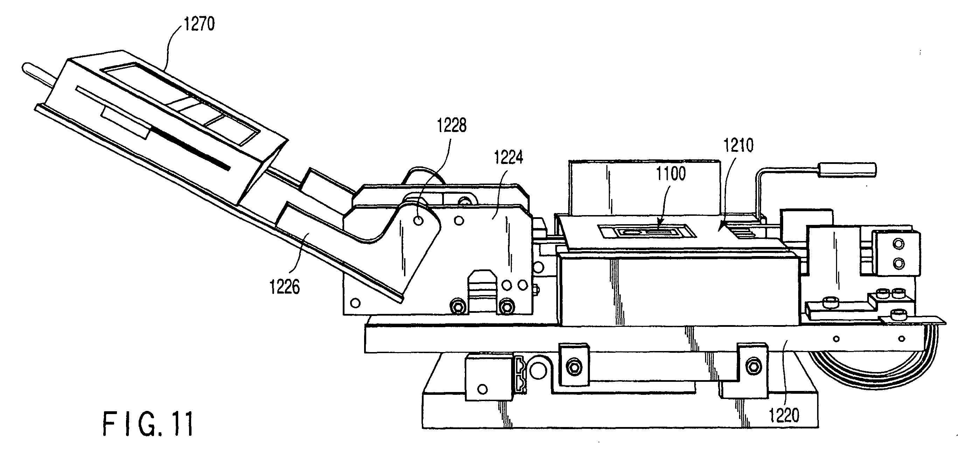

As shown in FIG. 10 and FIG. 11, a reaction vessel holding mechanism 1200, which detachably holds the reaction vessel 1100, has a base 1210 having a concave portion to store the reaction vessel 1100, a base table 1220, on which the base 1210 is mounted, a pair of frames 1224 fixed to the base table 1220, arms 1226 coupled to the frames 1224 through pivots 1228, and a cover member 1270 fixed to the arms 1226.

The base 1210 has a mounting table 1210a, on which the reaction vessel 1100 is mounted, and a receiving section 1210b, to which the reaction vessel 1100 is pressed. The arms 1226 can rotate on the pivots 1228, and the cover member 1270 can therefore be opened and closed over the base 1210.

The reaction vessel holding mechanism 1200 further has a clamp mechanism 1250, which clamps the reaction vessel 1100 onto the receiving section 1210b of the base 1210 in conjunction with the open/close operation of the cover member 1270. The clamp mechanism 1250 has a slider 1252, which slides in conjunction with the opening/closing of the cover member.

The slider 1252 approaches the reaction vessel 1100 disposed in the concave portion of the base 1210 as the cover member 1270 is closed, and moves away from the reaction vessel 1100 disposed in the concave portion of the base 1210 as the cover member 1270 is opened.

When the cover member 1270 is in a closed state, in other words, when the cover member 1270 is in a state disposed on the base 1210, the slider 1252 clamps the reaction vessel 1100 onto a side surface of the receiving section 1210b as shown in FIG. 12, so that the reaction vessel 1100 is held.

Furthermore, when the cover member 1270 is in an opened state, the slider 1252 is away from the reaction vessel 1100, and the reaction vessel 1100 can be easily removed from the concave portion of the base 1210.

However, when cleaning is performed with the supply of a cleaning liquid from the outside after completion of a reaction, the slider 1252 and the cover member 1270 are preferably independently moving mechanisms, that is, the slider is preferably a mechanism that does not operate in conjunction with the opening/closing of the cover.

The receiving section 1210b of the base 1210 has a through-hole 1234, which traverses a side surface opposite to the flow path terminating surface 1118 of the reaction vessel 1100, and when the reaction vessel 1100 is in a state held by the reaction vessel holding mechanism 1200, the reaction vessel 1100 is airtightly coupled to the base 1210 through an O-ring 1420, and the flow path 1114 of the reaction vessel 1100 is fluidly connected to the through-hole 1234 of the base 1210. Therefore, the flow path 1114 of the reaction vessel 1100 is fluidly coupled to the pump such as the syringe piston via the through-hole 1234 of the base 1210 and a tube 1430.

The reaction vessel holding mechanism 1200 has part of a vessel temperature control system for controlling the temperature of the reaction vessel 1100. The vessel temperature control system has, for example, heating means for heating the reaction vessel 1100. Desirably, the vessel temperature control system further has cooling means, for example, a cooling fan for cooling the reaction vessel 1100 for more rapidly responsive temperature control. The cooling means is usually disposed outside the reaction vessel holding mechanism 1200.

For this reason, the base 1210 has therein, for example, a heater 1212 generates heat in response to current supply, and a temperature sensor 1214, which detects the temperature of the heater 1212, as shown in FIG. 22. Alternatively, the base 1210 may have a circular path for circulating a high-temperature fluid, for example, liquid or gas, instead of having the heater 1212.

The cover member 1270 has a window 1274, which enables the optical observation of the reaction section 1132 of the reaction vessel 1100 from above in a closed state. The cover member 1270 further has an optically transparent member 1276, which covers the window 1274, a leaf spring 1292, which fixes the transparent member 1276, and a rubber sheet 1294 such as silicon rubber affixed to the leaf spring 1292. The leaf spring 1292 and the rubber sheet 1294 both have openings at a position corresponding to the window 1274.

The transparent member 1276 is, for example, glass, and preferably a material with a high thermal conductivity and high transparency.

When the cover member 1270 is in a closed state, the rubber sheet 1294 contacts the upper surface of the reaction vessel 1100, and serves to reduce the evaporation of the reaction liquid in the reaction vessel 1100. However, the upper well 1152 of the reaction vessel 1100 is not completely sealed, and the passage of air is secured by the groove 1166 between the upper well 1152 and the external space, whereby the air in the reaction vessel 1100 can easily move, and the reaction liquid in the reaction vessel 1100 is therefore not prevented from moving and can easily move in accordance with the pressurization and depressurization of the pump.

The rubber sheet 1294 does not always need to be affixed to the leaf spring 1292, and may be affixed to the reaction vessel 1100.

More suitably, water, buffer or the like is put in the liquid containing section 1162 to reduce the evaporation of the reaction liquid. The water or buffer contained in the liquid containing section 1162 increases the humidity of an atmosphere on a periphery of the upper well 1152, and more effectively reduce the evaporation of the reaction liquid. The reduction of evaporation by the water or buffer is especially preferable in a high-accuracy measurement or measurement at a high temperature. Suitable application is possible to a test in which many reaction liquids are automatically detected in many wells, which is expected in clinical tests or the like in the future.

The reaction vessel of the present embodiment can be applied not only to genetic tests, but also to tests of cells, protein, antigen and antibody. In such tests, the cells, protein, antigen and antibody may be larger than genes, or the viscosity of the reaction liquid may be high. In such a case, since the reaction liquid has difficulty in moving, the groove 1166 may be preferably enlarged.

The reaction vessel of the present embodiment can be applied not only to genetic tests, but also to tests of cells, protein, antigen and antibody. The cells, protein, antigen and antibody are often denatured by heat.

The reaction vessel holding mechanism 1200 of the present embodiment has a space between a heater 1282 and the leaf spring 1292, and this space serves to prevent the heater 1282 from directly giving an affect on the reaction liquid. As a result, the effect of heat such as an overshoot becomes indirect, and the denaturation of the cells, protein, antigen and antibody due to heat is reduced.

As in the first embodiment, the reaction vessel holding mechanism 1200 is combined with the Z stage 320 of the optical microscope 300 for fluorescence observation through the XY stage 310 to constitute a genetic testing apparatus.

The reaction vessel 1100 held by the reaction vessel holding mechanism 1200 is optically observed from above by the optical microscope 300, as in the first embodiment. As described above, since the upper well 1152 of the reaction vessel 1100 is open in the upper surface, the reaction occurring in the reaction section 1132 can be observed from above by the optical microscope 300.

Furthermore, the reaction liquid in the reaction vessel 1100 is repeatedly passed through the reaction section 1132 by the pressurization and depressurization of the pump communicating with the flow path 1114, thereby detecting the object to be observed, for example, nucleic acid in a relatively short time.

The specific embodiments of the present invention have so far been described referring to the drawings, but the present invention is not limited to the embodiments described above and may be variously modified without departing from its spirit.

### Industrial Applicability

According to the present invention, a reaction vessel that can be suitably applied to genetic tests using a three-dimensional DNA microarray is provided. Further, a reaction vessel holding mechanism that can simply and detachably hold the reaction vessel is provided.

## Claims

1. A reaction vessel used for a genetic test comprising:
at least one reaction liquid containing section for containing a reaction liquid, the reaction liquid containing section having an upper well opening in an upper surface of the reaction vessel, a lower well located under the upper well, and a flow path communicating an external space with the lower well; and
a reaction section disposed between the upper well and the lower well, the reaction section having a nucleic acid probe fixed to bones of a porous member,
wherein the upper well opening in the upper surface of the reaction vessel enables optical observation of the reaction section from above the reaction vessel.

2. The reaction vessel according to claim 1, wherein a sum of volumes of the lower well and the flow path is larger than a volume of the upper well, and the lower well and the flow path can contain a whole amount of reaction liquid first put in the upper well.

3. The reaction vessel according to claim 1 or 2, further having a groove extending from the upper well in the upper surface of the reaction vessel, the groove being partially covered by a cover glass, which is mounted on the reaction vessel to prevent the reaction liquid from evaporating, so that passage of air is secured between the upper well and the external space.

4. The reaction vessel according to claim 3, further having a concave portion, which restricts a position to mount the cover glass, wherein the groove extends out of the concave portion.

5. The reaction vessel according to claim 1 or 2, further having: a liquid containing section, which contains and retains liquid; a first groove extending in the upper surface of the reaction vessel between the upper well and the liquid containing section; and a second groove extending from the liquid containing section in the upper surface of the reaction vessel, wherein the second groove is partially covered by the cover glass, which is mounted on the reaction vessel to prevent the evaporation of the reaction liquid, and the passage of air is secured between the upper well and the external space via the liquid containing section.

6. The reaction vessel according to any one of claims 1 to 5, further having a ring groove, which encloses an opening end of the flow path located in a side surface of the reaction vessel to receive an O-ring.

7. The reaction vessel according to any one of claims 1 to 6, further having a protrusion formed on a bottom surface of the lower well, the protrusion restricting deformation of the reaction section.

8. A reaction vessel holding mechanism of holding a reaction vessel used for a genetic test, the reaction vessel comprising at least one reaction liquid containing section for containing a reaction liquid, the reaction liquid containing section having an upper well opening in an upper surface of the reaction vessel, a lower well located under the upper well, and a flow path communicating an external space with the lower well, the reaction vessel further comprising a reaction section disposed between the upper well and the lower well, the reaction section having a nucleic acid probe fixed to bones of a porous member, the upper well opening in the upper surface of the reaction vessel enabling optical observation of the reaction section from above the reaction vessel, the reaction vessel holding mechanism comprising:
a mounting table, on which the reaction vessel is mounted;
a receiving section, onto which the reaction vessel is pressed;
clamp mechanisms, which clamp the reaction vessel onto the receiving section;
a first temperature control system for controlling the temperature of the reaction vessel; and
a second temperature control system for controlling the temperature of an atmosphere in the vicinity of the upper surface of the reaction vessel.

9. The reaction vessel holding mechanism according to claim 8, wherein the second temperature control system has heating means, which is disposed away from the reaction vessel near the upper surface of the reaction vessel.

10. The reaction vessel holding mechanism according to claim 9, further having a cover member, which is disposed above the reaction vessel, and supports the heating means, the cover member having a window permitting transmission of light, the window being located above the reaction section of the reaction vessel and enabling optical observation of the reaction section from above the reaction vessel.

11. The reaction vessel holding mechanism according to claim 10, wherein the cover member further has an optically transparent member, which spatially closes the window.
